# EUROPÄISCHE PATENTSCHRIFT

(11) **EP 0 788 071 B1**
(45) Veröffentlichungstag und Bekanntmachung des Hinweises auf die Patenterteilung: **07.11.2001**
(21) Anmeldenummer: 97100482.5
(22) Anmeldetag: 15.01.1997
(51) Int. Cl.: G06T 17/00, G06T 7/60

(54) **Verfahren zur Ermittlung von dreidimensionalen Objekt-Eigenschaften**
Method for detecting three-dimensional object procperties
Méthode pour rechercher les propriétés tridimensionnelles d'objet

(30) Priorität: 02.02.1996 DE 19603774
(43) Veröffentlichungstag der Anmeldung: 06.08.1997
(73) Patentinhaber: Carl Zeiss, 89518 Heidenheim (Brenz) (DE); Carl-Zeiss-Stiftung trading as Carl Zeiss, 89518 Heidenheim (Brenz) (DE)
(72) Erfinder: Burow, Manfred, 81379 München (DE)
(74) Vertreter: Gnatzig, Klaus

(56) Entgegenhaltungen:
- EP-A- 0 501 716
- EP-A- 0 592 126
- GIBSON C J: "Rapid three dimensional display of medical data using ordered surface list representations" SCIENCE AND ENGINEERING OF MEDICAL IMAGING, PARIS, FRANCE, 24-26 APRIL 1989, Bd. 1137, ISSN 0277-786X, PROCEEDINGS OF THE SPIE - THE INTERNATIONAL SOCIETY FOR OPTICAL ENGINEERING, USA, Seiten 114-119, XP002068710
- PATENT ABSTRACTS OF JAPAN vol. 018, no. 665 (P-1844), 15.Dezember 1994 & JP 06 259575 A (TOSHIBA CORP), 16.September 1994,

## Beschreibung

Die Erfindung bezieht sich auf ein Verfahren und eine Vorrichtung zur Ermittlung von dreidimensionalen Objekteigenschaften.

Aus dem Artikel "Rapid three dimensional display of medical data..." von C. J. Gibson in SPIE, Volume 1137 Seiten 114 - 119, 1989 ist ein Verfahren gemäß des Oberbegriffes des Anspruches 1 bekannt. Das dort beschriebene Verfahren dient zur Erzeugung unterschiedlicher Objektansichten, insbesondere zweidimensionaler Bilder, aus einem dreidimensionalen Datenvolumen in der Thomographie.

Da 3D-Volumina sehr große Datenmengen beinhalten, ist nicht sichergestellt, daß ein Volumen vollständig in einen RAM-Speicher eingelesen werden kann. Damit arbeiten die bekannten Verfahren vergleichsweise langsam.

Der Erfindung liegt die Aufgabe zugrunde, ein schnelles Verfahren und eine entsprechende Vorrichtung zur Ermittlung von dreidimensionalen Objekteigenschaften anzugeben.

Dieses Ziel wird erfindungsgemäß durch ein Verfahren mit den Merkmalen des Anspruches 1 und durch eine Vorrichtung mit den Merkmalen des Anspruches 3 gelöst. Durch die erfindungsgemäße Dimensionsreduzierung findet eine erhebliche Datenreduktion statt, die auch im Zusammenhang mit der sequentiellen Abarbeitung eine schnelle Auswertung und damit eine schnelle Ermittlung der dreidimensionalen Objekt-Eigenschaften ermöglicht.

Dabei wird in an sich bekannter Weise ein Sensor verwendet, der das Objekt in Form von K*L*M Voxeln entlang der Koordinatenachsen x, y und z erfaßt. Dieser Sensor kann jeder für den jeweiligen Anwendungsfall geeignete Sensor, wie beispielsweise ein optischer oder akustischer Bildaufnehmer, eine Röntgeneinheit, ein Scanner oder dgl., sein.

Das Ausgangssignal des Sensors ist an eine Steuer- und Auswerteeinheit angelegt, die insbesondere ein handelsüblicher PC sein kann, und die die Daten insbesondere auf einem sequentiellen Medium zwischenspeichert.

Das Verfahren zur Gewinnung von 3-D Objekteigenschaften gliedert sich in zwei Phasen:

Die erste Phase, die Extraktion, erstellt aus einem Binärvolumen in einem einzigen Durchlauf eine Datei, welche die Beschreibung aller Objektoberflächen des Binärvolumens in hierarchischer Darstellung enthält. Hierbei wird - abhängig von der Struktur des Binärvolumens - normalerweise auch eine deutliche Datenreduktion erreicht. Trotzdem kann das Binärvolumen vollständig aus der Datei zurückgewonnen werden, es tritt kein Informationsverlust auf. Diese Datei wird als Eingabedatei für die zweite Phase, die Auswertung, verwendet. Die Auswertung zur Ermittlung der dreidimensionalen Objekteigenschaften verfährt entsprechend der in der Extraktions-Phase erzeugten Datenstruktur.

Das erfindungsgemäße Verfahren ist, insbesondere in der ersten Phase, so konzipiert, daß es nicht wahlfrei auf das Volumen zugreift, sondern ausschließlich sequentiell liest: Beispielsweise werden erst die Spalten in x-Richtung, dann die Zeilen in y-Richtung, schließlich die Scheiben in z-Richtung gelesen. Die Spalten, Zeilen und Scheiben können aber auch in einer anderen vorgegebenen Reihenfolge sequentiell gelesen werden. Daher können auch von einem externen sequentiellen Medium (wie einer Platte oder einem Band) die Daten schnell eingelesen werden. Wenn die Eingangsdaten nicht binär sind, werden sie beim Einlesen über Transformationstabellen oder Funktionen in binäre Daten umgewandelt.

Das Ergebnisdatenvolumen ist im Normalfall um einiges kleiner als das ursprüngliche 3-D Datenvolumen, aber auch hier sollte die Verwendung von RAM-Speichern vermieden werden, besonderes wenn große Datenvolumen oder komplexe Volumeninhalte vorliegen. Die Ergebnisdatei wird daher erfindungsgemäß rein sequentiell beschrieben.

Insbesondere weist das erfindungsgemäße Verfahren folgende Schritte auf:
- die Daten werden von der Auswerteeinheit sequentiell verarbeitet,
- zur Ermittlung der Oberfläche zerlegt die Auswerteeinheit das Datenvolumen in K zweidimensionale Schnitte orthogonal zur x-Richtung, in L zweidimensionale Schnitte orthogonal zur y-Richtung und in M zweidimensionale Schnitte orthogonal zur z-Richtung,
- aus den von den Schnittebenen durchdrungenen Facetten (Hintergrund-Objekt- und Objekt-Hintergrund-Übergänge) der Objektoberfläche ermittelt die Auswerteeinheit die Pixel-Ränder (Cracks) in Form von Crack-Ketten für jeden Schnitt,
- die Steuereinheit extrahiert daraus die Hüllen der Objekt-Oberfläche dadurch, daß sie die Crack-Ketten in allen Schnitten erzeugt.

Bei einer erfindungsgemäßen Weiterbildung ermittelt die Auswerteeinheit die Oberfläche von lokalen; aus binären 2*2*2 Voxeln bestehenden Analysefenstern. Dabei kann die Auswerteeinheit aus der Menge der geschnittenen Objektvoxel die Flächen berechnen.

Eine weitere Verbesserung erhält man, wenn die Auswerteeinheit die Crack-Ketten an ihren Schnittpunkten zu Knoten verknüpft.

Durch die Möglichkeit, zum Ermitteln der Objekt-Oberfläche die Facetten der Hüllen linear abzuarbeiten, wird die Arbeitsgeschwindigkeit weiter erhöht.

Eine weitere Reduktion der Eingangsdaten erhält man dadurch, daß die Steuereinheit die Facetten nur mit einer Orientierung verwendet.

In der Zeichnung ist ein Ausführungsbeispiel der Erfindung dargestellt. Es zeigen
- Fig. 1: ein aus sieben Voxeln bestehendes dreidimensionales Objekt,
- Fig. 2: die zweidimensionalen Flächen, die aus den von den Schnitt-ebenen durchdrungenen Facetten zusammengesetzt sind und deren Ränder durch Crack-Ketten definiert sind, sowie
- Fig. 3: eine schematische Darstellung einer Vorrichtung zur Durchführung des erfindungsgemäßen Verfahrens

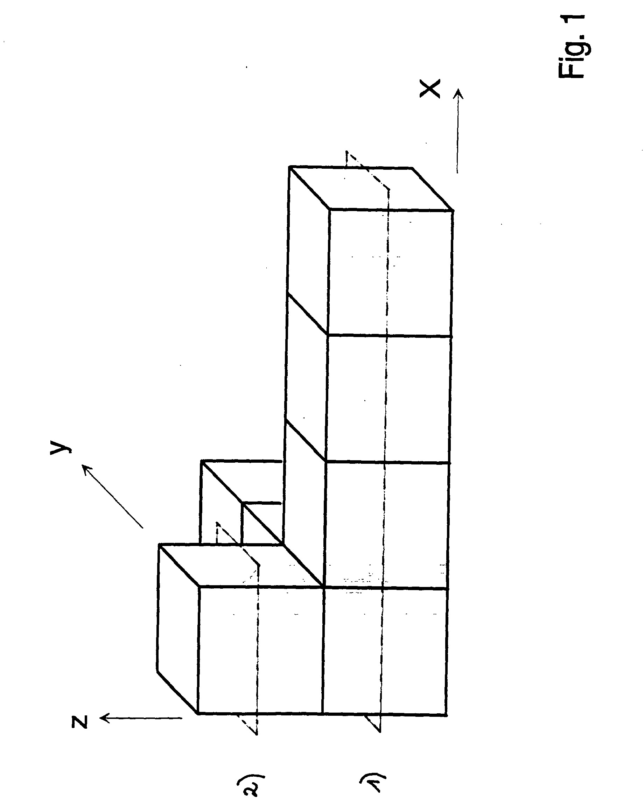

Fig. 1 zeigt ein dreidimensionales Objekt, das mittels eines vorzugsweise optischen Sensors in Form von K*L*M = 4*3*2 Voxeln entlang der Koordinatenachsen x, y und z erfaßt wurde. Die Voxel sind als Quader dargestellt. Zur Ermittlung der dreidimensionalen Objekt-Eigenschaften wird erfindungsgemäß in der Extraktions-Phase anstelle des Objektvolumens die Objekt-Oberfläche beschrieben. Die Objekt-Oberfläche setzt sich aus den Facetten der Voxel zusammen. Die Facetten der Voxel sind die Flächen der Quader, die sich bei den Übergängen vom Hintergrund zum Objekt bzw. vom Objekt zum Hintergrund befinden. Somit sind in Fig. 1 alle sichtbaren Flächen der Quader Facetten. In der Extraktions-Phase wird aus einem 3-D Binärvolumen in einem einzigen Durchlauf sequentiell eine Datei erstellt, die die aus den Facetten zusammengesetzte Objekt-Oberfläche beschreibt.

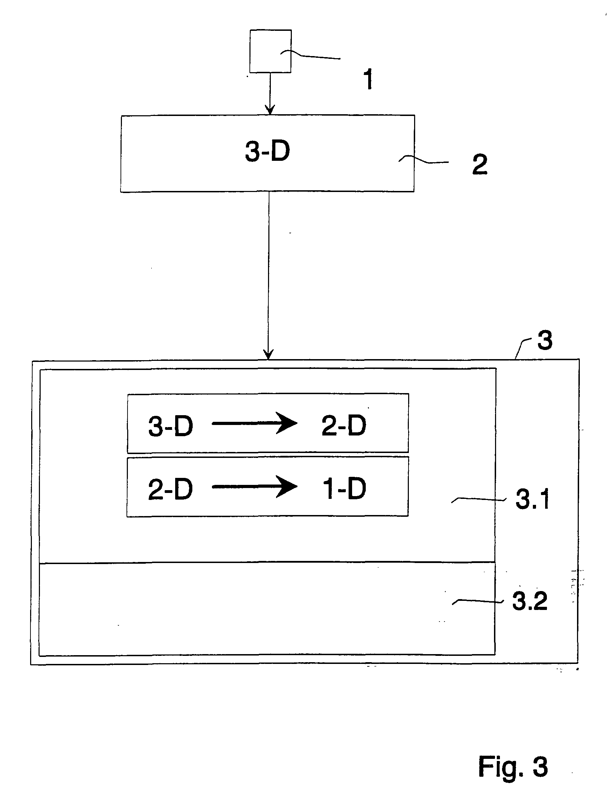

Hierzu zerlegt eine Auswerteeinheit 3 (Extraktionsblock 3.1, vgl. Fig. 3) das Datenvolumen in K, hier vier, zweidimensionale Schnitte orthogonal zur x-Richtung, in L, hier drei, zweidimensionale Schnitte orthogonal zur y-Richtung und in M, hier zwei, zweidimensionale Schnitte orthogonal zur z-Richtung. In Fig. 1 sind die zweidimensionalen Schnitte orthogonal zur z-Richtung, beginnend beim Null-Punkt des Koordinatensystems, als Beispiel dargestellt. Die zweidimensionalen Schnitte orthogonal zu den Koordinatenachsen verlaufen durch die Mittelpunkte der Voxel.

Die von einem zweidimensionalen Schnitt getroffenen Voxel bilden sich in der Schnittebene als eine aus Pixeln zusammengesetzte zweidimensionale Fläche ab.

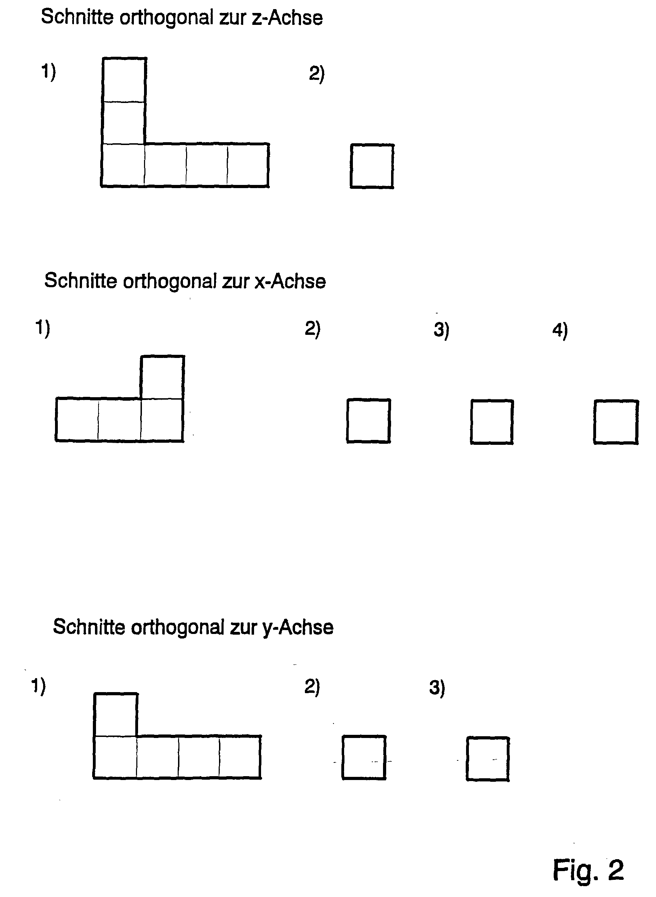

In Fig. 2 sind alle durch dieses erfindungsgemäße Verfahren entstehenden zweidimensionalen Flächen abgebildet. Die Ränder der so gebildeten Flächen werden durch geschlossene kreuzungsfreie Crack-Ketten (dicke Linien) erfaßt. Als Cracks werden üblicherweise die Ränder eines Pixels bezeichnet.
Vorzugsweise entstehen die Crack-Ketten dadurch, daß die Ränder der Pixel einer zweidimensionalen Flächen durch Erfassung der Übergänge zwischen der Objektfläche und dem Hintergrund festgestellt werden (Codierung z.B. 0 für Hintergrund, 1 für Objekt). Beginnend bei einem bestimmten Pixel einer Objektfläche wird eine Abtastreihenfolge der übrigen Pixel derselben Objektfläche dadurch vorgegeben, daß z.B. das Objekt immer links und der Hintergrund immer rechts im Umlaufsinn liegen soll.

Damit erhält eine Crack-Kette eine Orientierung (Umlaufsinn).

Bereits aus den Crack-Ketten der Schnitte othogonal zu nur einer Achse können durch Erweiterung der eindimensionalen Ketten zu zweidimensionalen, geschlossenen Bändern Teil-Hüllen des Objekts gebildet werden.

Betrachtet man die Crack-Ketten aller Schnitte durch ein Objekt als Ganzes, so zeigt sich, daß jede Facette von zwei orthogonalen Crack-Ketten durchlaufen wird. Nach Wahl der Orientierung der Crack-Ketten läßt sich die Oberfläche eines Objekts z.B. als gerichteter Graph darstellen, in dem die Facetten die Knoten darstellen und die Crack-Richtungen die Kanten, welche über die Facettenränder auf den nächsten Knoten weisen. Jeder Knoten hat zwei Eingangskanten und zwei Ausgangskanten. Erzeugt man die Crack-Ketten in allen Schnitten und verknüpft sie in ihren Schnittpunkten an den Facetten zu Knoten, so hat man die Objekt-Oberfläche extrahiert. Mit einem geeigneten Graph-Traversierungs-Algorithmus lassen sich die Facetten linear abarbeiten oder als lineare Daten abspeichern.

Werden mehrere dreidimensionale Objekte in einem Raum bzw. vor einem Hintergrund erfaßt, können die einzelnen voneinander unabhängigen Objektoberflächen bzw. Hüllen durch das erfindungsgemäße Verfahren in einem Durchlauf parallel abgearbeitet werden.

Durch die Zerlegung der 3-D Daten in mehrere 2-D Daten und deren sequentielle Abarbeitung findet zum einen eine erhebliche Datenreduktion und zum anderen eine schnelle Ermittlung der dreidimensionalen Objekt-Eigenschaften statt.

In einer Weiterbildung der Erfindung kann eine weitere Datenreduktion und Beschleunigung des Verfahrens erreicht werden, indem auch die zweidimensionalen Daten, z. B. durch zeilenweises Abarbeiten der Flächen (vorzugsweise Zwei-Zeilen-Verfahren), um eine Dimension verringert werden.

Vorteil des erfindungsgemäßen datenreduzierenden Verfahrens während der Extraktionsphase ist, daß trotz der Datenreduktion kein Informationsverlust auftritt, so daß in der Auswerte-Phase alle Objekt-Eigenschafts-Daten vorliegen, die auch eine vollständige Datei eines 3-D Datenvolumens enthält.

Fig. 3 zeigt schematisch eine Vorrichtung zur Durchführung des Verfahrens. Ein Sensor 1, vorzugsweise ein optischer Sensor, ist mit einer an sich bekannten 3-D-Erfassungseinrichtung 2 verbunden. Diese 3-D-Erfassungseinrichtung führt zur erfindungsgemäßen Steuer- und Auswerteeinheit 3.
Der Sensor 1 erfaßt zusammen mit der Erfassungseinheit 2 ein oder mehrere Objekte in einem Raum (Hintergrund) in Form von K*L*M Voxeln entlang der Koordinatenachsen x, y und z. In der Erfassungseinheit 2 ist danach ein 3-D-Datenvolumen sehr großen Umfangs abgespeichert, der der erfindungsgemäßen Steuer- und Auswerteeinheit 3 zur Weiterverarbeitung zur Verfügung gestellt wird. Im Extraktionsblock 3.1 der Steuer- und Auswerteeinheit 3 wird das der Extraktionsphase zugeordnete erfindungsgemäße Verfahren zur Datenreduktion, insbesondere zur Dimensionsreduktion mit sequentieller Abarbeitung, durchgeführt. Die im Extraktionsblock 3.1 gewonnen Daten werden anschließend dem Auswerteblock 3.2 der Steuer- und Auswerteeinheit 3 übergeben. Das im Auswerteblock 3.2 durchgeführte Verfahren ist an das im Extraktionsblock 3.1 durchgeführte Verfahren bzw. dessen Ergebnis entsprechend angepaßt.

## Patentansprüche

1. Verfahren zur Ermittlung von dreidimensionalen Objekt-Eigenschaften unter Verwendung eines durch einen Sensor in Form von K*L*M Voxeln entlang der Koordinatenachsen x,y und z erfaßten, dreidimensionalen Datenvolumens, wobei mittels einer Steuer- und Auswerteeinheit (3; 3.1) aus den Daten des dreidimensionalen Datenvolumens (3-D) sequentiell eine reduzierte Menge binärer dimensionsreduzierter, insbesondere zweidimensionaler, Daten gebildet wird, durch die die Objektoberfläche als Hülle aus Facetten der Voxel ermittelbar ist, und daß die Daten sequentiell abgespeichert werden, **dadurch gekennzeichnet, daß** die binären zweidimensionalen Daten mittels der Steuer- und Auswerteeinheit (3; 3.1) dadurch erzeugt werden, daß das dreidimensionale Datenvolumen (3-D) in K (4) zweidimensionale Schnitte orthogonal zur x-Richtung, in L (3) zweidimensionale Schnitte orthogonal zur y-Richtung und in M (2) zweidimensionale Schnitte orthogonal zur z-Richtung zerlegt wird, so daß die Objektoberfläche (4) mittels der Ränder der Flächen ermittelbar ist, die aus Pixeln zusammengesetzt durch die jeweils von einem zweidimensionalen Schnitt getroffenen Voxel entstehen.

2. Verfahren nach Anspruch 1, **dadurch gekennzeichnet, daß** mittels der Steuer- und Auswerteeinheit (3; 3.1) aus den von den zweidimensionalen Schnitten (Schnittebenen) durchdrungenen Facetten der Objektoberfläche die Pixel-Ränder (Cracks) für jeden Schnitt in Form von Crack-Ketten ermittelt werden, durch die die Ränder der aus Pixeln zusammengesetzten Flächen definiert sind, woraus die Objektoberfläche als Hülle des Objekts erzeugbar ist.

3. Vorrichtung zur Ermittlung von dreidimensionalen Objekt-Eigenschaften und insbesondere von Oberflächen eines Objekts mit
- einem Sensor, der das Objekt in Form von K*L*M Voxeln entlang der Koordinatenachsen x, y und z in einem dreidimensionalen Datenvolumen erfaßt,
- einer Steuer- und Auswerteeinheit, an die das Ausgangsignal des Sensors angelegt ist, und die die Daten sequentiell als eine reduzierte Menge binärer dimensionsreduzierter, insbesondere zweidimensionaler, Daten bildet, durch die die Objektfläche als Hülle aus Facetten der Voxel ermittelbar ist, und die die Daten sequentiell auf einem Medium zwischenspeichert und die Daten sequentiell verarbeitet,
**dadurch gekennzeichnet, daß**
- zur Ermittlung der Oberfläche die Auswerteeinheit das dreidimensionalen Datenvolumen in K zweidimensionale Schnitte orthogonal zur x-Richtung, in L zweidimensionale Schnitte orthogonal zur y-Richtung und in M zweidimensionale Schnitte orthogonal zur z-Richtung zerlegt,
- aus den von den Schnitt-Ebenen durchdrungenen Facetten (Hintergrund-Objekt- und Objekt-Hintergrund-Übergänge) der Objektoberfläche die Auswerteeinheit die Pixel-Ränder (Cracks) in Form von Crack-Ketten für jeden Schnitt ermittelt und
- die Steuereinheit, daraus die Hüllen der Objekt-Oberfläche dadurch extrahiert, daß sie die Crack-Ketten in allen Schnitten erzeugt.

4. Vorrichtung nach Anspruch 3, **dadurch gekennzeichnet, daß** die Auswerteeinheit die Oberfläche von lokalen, aus binären 2x2x2 Voxeln bestehenden Analysefenstern ermittelt.

5. Vorrichtung nach Anspruch 3 oder 4, **dadurch gekennzeichnet, daß** die Auswerteeinheit aus der Menge der geschnittenen Objektvoxeln die Fläche berechnet.

6. Vorrichtung nach einem der Ansprüche 3 bis 5, **dadurch gekennzeichnet, daß** die Auswerteeinheit die Crack-Ketten an ihren Schnittpunkten zu Knoten verknüpft.

7. Vorrichtung nach einem der Ansprüche 3 bis 6, **dadurch gekennzeichnet, daß** die Steuereinheit zum Ermitteln der Objektoberfläche die Facetten der Hüllen linear abarbeitet.

8. Vorrichtung nach Anspruch 7, **dadurch gekennzeichnet, daß** die Steuereinheit zur Reduktion der Eingangsdaten die Facetten nur mit einer Orientierung verwendet.

9. Vorrichtung nach einem der Ansprüche 2 bis 8, **dadurch gekennzeichnet, daß** die Steuereinheit Ausgangssingnale des Sensors, die nicht in binärer Form vorliegen, beim Einlesen nach dem Zwischenspeichern in binäre Daten umwandelt.

## Claims

1. Method for determining three-dimensional object properties by using a three-dimensional data volume detected by a sensor in the form of K*L*M voxels along the coordinate axes x, y and z, a control and evaluation unit (3; 3.1) being used to form sequentially, from the data of the three-dimensional data volume (3-D), a reduced set of binary dimensionally reduced, in particular two-dimensional, data, by means of which set the object surface can be determined as an envelope composed of facets of the voxels, and in that the data are stored sequentially, **characterized in that** the binary two-dimensional data are produced by means of the control and evaluation unit (3; 3.1) by virtue of the fact that the three-dimensional data volume (3-D) is decomposed into K(4) two-dimensional sections orthogonal to the x-direction, into L(3) two-dimensional sections orthogonal to the y-direction and into M(2) two-dimensional sections orthogonal to the z-direction, such that the object surface (4) can be determined by means of the edges of the surfaces which are assembled from pixels and produced by the voxels affected in each case by a two-dimensional section.

2. Method according to Claim 1, **characterized in that** the control and evaluation unit (3; 3.1) is used to determine, from the facets of the object surface which are penetrated by the two-dimensional sections (section planes), the pixel edges (cracks) for each section in the form of crack chains by means of which the edges of the surfaces assembled from pixels are defined, it being possible to generate the object surface therefrom as envelope of the object.

3. Device for determining three-dimensional object properties and, in particular, surfaces of an object, having
- a sensor which detects the object in the form of K*L*M voxels along the coordinate axes x, y and z in a three-dimensional data volume and,
- a control and evaluation unit to which the output signal of the sensor is applied, which forms the data sequentially as a reduced set of binary dimensionally reduced, in particular two-dimensional, data, by means of which set the object surface can be determined as an envelope composed of facets of the voxels, and which buffers the data sequentially on a medium and processes the data sequentially,
**characterized in that**
- in order to determine the surface the evaluation unit decomposes the three-dimensional data volume into K two-dimensional sections orthogonal to the x-direction, into L two-dimensional sections orthogonal to the y-direction and into M two-dimensional sections orthogonal to the z-direction,
- the evaluation unit determines the pixel edges (cracks) in the form of crack chains for each section from the facets (background-object and object-background transitions) of the object surface through which the section planes penetrate, and
- the control unit extracts the envelopes of the object surface therefrom by generating the crack chains in all sections.

4. Device according to Claim 3, **characterized in that** the evaluation unit determines the surface of local analysis windows comprising binary 2 × 2 × 2 voxels.

5. Device according to Claim 3 or 4, **characterized in that** the evaluation unit calculates the surface from the set of sectioned object voxels.

6. Device according to one of Claims 3 to 5, **characterized in that** the evaluation unit combines the crack chains at their points of intersection to form nodes.

7. Device according to one of Claims 3 to 6, **characterized in that** in order to determine the object surface the control unit processes the facets of the envelopes linearly.

8. Device according to Claim 7, **characterized in that** in order to reduce the input data the control unit uses the facets only with one orientation.

9. Device according to one of Claims 2 to 8, **characterized in that** during reading-in after the buffering the control unit converts into binary data output signals of the sensor which are not present in binary form.

## Revendications

1. Méthode pour rechercher les propriétés tridimensionnelles d'un objet en utilisant un volume de données tridimensionnelles collectées par un capteur le long des axes de coordonnées x, y et z sous la forme de Voxels K*L*M, une quantité réduite de données à dimension réduite de manière binaire, notamment bidimensionnelles, étant formées séquentiellement à partir des données du volume de données tridimensionnelles (3-D) au moyen d'une unité de commande et d'évaluation (3 ; 3.1), données à l'aide desquelles la surface de l'objet peut être déterminée sous la forme d'une enveloppe composée des facettes du Voxel, et que les données sont mémorisées séquentiellement, **caractérisée en ce que** les données bidimensionnelles binaires sont générées au moyen de l'unité de commande et d'évaluation (3 ; 3.1) **en ce que** le volume de données tridimensionnelles (3-D) dans K (4) est décomposé en une coupe bidimensionnelle orthogonale à la direction x, dans L (3) est décomposé en une coupe bidimensionnelle orthogonale à la direction y et dans M (2) est décomposé en une coupe bidimensionnelle orthogonale à la direction z de manière à ce que la surface de l'objet (4) puisse être déterminée à l'aide des bords des surfaces qui sont reconstituées par des pixels par le biais du Voxel obtenu à chaque fois d'une coupe bidimensionnelle.

2. Méthode selon la revendication 1, **caractérisée en ce que** les bords de pixel (cracks) sont déterminés pour chaque coupe à l'aide de l'unité de commande et d'évaluation (3 ; 3.1) à partir des facettes de la surface de l'objet issues des coupes bidimensionnelles (plans de coupe) sous la forme de chaînes de cracks par lesquelles sont définis les bords des surfaces composées de pixels, la surface de l'objet pouvant en être générée sous la forme d'une enveloppe de l'objet.

3. Dispositif pour rechercher les propriétés tridimensionnelles d'un objet et notamment des surfaces d'un objet avec
- un capteur qui collecte l'objet sous la forme de Voxels K*L*M le long des axes de coordonnées x, y, z dans un volume de données tridimensionnelles,
- une unité de commande et d'évaluation à laquelle est acheminé le signal de sortie du capteur et qui forme des données de dimension binaire réduite, notamment bidimensionnelles, de manière séquentielle sous la forme d'une quantité réduite de données, données par le biais desquelles peut être déterminée la surface de l'objet sous la forme d'une enveloppe composée des facettes du Voxel et qui mémorise séquentiellement les données sur un support et qui traite séquentiellement les données,
**caractérisé en ce que**
- pour rechercher la surface, l'unité d'évaluation décompose le volume de données tridimensionnelles en K coupes bidimensionnelles orthogonales à la direction x, en L coupes bidimensionnelles orthogonales à la direction y et en M coupes bidimensionnelles orthogonales à la direction z,
- l'unité d'évaluation détermine les bords des pixels (cracks) sous la forme de chaînes de cracks pour chaque coupe à partir des facettes issues des plans de coupe (transitions entre l'arrière-plan et l'objet et entre l'objet et l'arrière plan) de la surface de l'objet, et
- l'unité de commande en extrait les enveloppes de la surface de l'objet de manière à ce que les chaînes de cracks soient générées dans toutes les coupes.

4. Dispositif selon la revendication 3, **caractérisé en ce que** l'unité d'évaluation détermine les surfaces de fenêtres d'analyse locales composées de Voxels binaires 2x2x2.

5. Dispositif selon la revendication 3 ou 4, **caractérisé en ce que** l'unité d'évaluation calcule la surface à partir de la quantité de Voxels coupés de l'objet.

6. Dispositif selon la revendication 3 ou 5, **caractérisé en ce que** l'unité d'évaluation lie les chaînes de cracks en leurs points d'intersection pour former des noeuds.

7. Dispositif selon l'une des revendications 3 à 6, **caractérisé en ce que** l'unité de commande traite les facettes des enveloppes de manière linéaire pour déterminer la surface de l'objet.

8. Dispositif selon la revendication 7, **caractérisé en ce que** l'unité de commande n'utilise les facettes qu'avec une seule orientation afin de réduire les données initiales.

9. Dispositif selon l'une des revendications 2 à 8, **caractérisé en ce que** l'unité de commande convertit les signaux de sortie du capteur, lesquels ne sont pas sous forme binaire, en données binaires lors de leur lecture après la mémorisation intermédiaire.
